# EUROPEAN PATENT APPLICATION

(11) **EP 4 261 233 A1**
(43) Date of publication of application: **18.10.2023**
(21) Application number: 22206956.9
(22) Date of filing: 11.11.2022
(51) Int. Cl.: C08B 15/04, C08L 1/04, C08L 5/00, C08L 1/28

(54) **A NATURAL AND BIODEGDRADABLE RHEOLOGY MODIFIER**

(30) Priority: 11.04.2022 EP 22167694
(71) Applicant: Bioweg UG, 49610 Quakenbrück (DE)
(72) Inventor: MITTAL, Anuj, 49610 Quakenbrück (DE); MAHALWAR, Prateek, 49610 Quakenbrück (DE); KARATURI, Srinivas, 49610 Quakenbrück (DE)
(74) Representative: Hertin und Partner Rechts- und Patentanwälte PartG mbB

(57) **Abstract**

The invention relates to a biodegradable rheology modifier for use in a formulation or fluid product, the biodegradable rheology modifier comprising a bacterial cellulose wherein the bacterial cellulose is surface-modified and comprises at least one carboxyl group or derivative thereof. The biodegradable rheology modifier further comprises at least one natural gum, wherein the surface-modified bacterial cellulose interacts with the natural gum to increase the viscosity of the fluid product. In further aspects the invention relates to a liquid product comprising the biodegradable rheology modifier and to a method for producing said biodegradable rheology modifier.

## Description

The invention relates to a novel biodegradable rheology modifier for use in a fluid product. The biodegradable rheology modifier comprises a bacterial cellulose wherein the bacterial cellulose is surface-modified and comprises at least one carboxyl group or a derivative thereof. The biodegradable rheology modifier further comprises at least one natural gum, wherein the surface-modified bacterial cellulose interacts with the natural gum to increase the viscosity of the fluid product. The invention also relates to a fluid product comprising the biodegradable rheology modifier, wherein the product is preferably a cosmetic product, a pharmaceutical product, an ink, a paint, a coating or a food product. The invention relates further to a method of producing the biodegradable rheology modifier, the method comprising surface modification of cellulose by carboxylation to form carboxyl groups and/or derivatives thereof in the cellulose polymers and mixing of the surface-modified cellulose with a natural gum.

### BACKGROUND AND PRIOR ART

The safety, shelf-life, applicability, aesthetic and haptic quality of various fluid or semi-solid products depend on their viscosity, density and flow properties. Many such everyday products comprise suspensions, for example of minerals or polymers. In the case of minerals, for instance, wall paints often comprise suspended titanium dioxide (TiO₂) particles which contribute to the opacity and are used to adjust the color of the paint. Such paints are often stored for months or years before use, during which time the suspended particles may settle, resulting in inconsistencies in the color and opacity of the paint. Furthermore, the adherence of a paint to a surface and the avoidance of unwanted dripping during the period required for the paint to dry depends on its flow behavior, that is, its rheology. This rheology is often adjusted by the addition of additives which may include thinners or thickeners. Examples of such additives include synthetic approaches like polymers, e.g., polyacrylates which contribute to the desirable shear thinning behavior of wall paints.

Similarly, cosmetic products often comprise suspended ingredients such as ZnO particles in the case of sunscreen, oil-based droplets in the case of moisturizers or microbeads in many hygiene products. Due to gravity, these ingredients tend to settle to the bottom of the cosmetic product with time. This significantly reduces its shelf life. It is often adjusted by thickening additives which modify the rheological properties of the suspension such that the settling behavior is dramatically slowed. However, in the case of such products, the use of inorganic and/or non-renewable rheology-modifying additives can be inappropriate and may also come with health risks.

To improve said rheological properties, several rheology modifiers which may comprise organic or inorganic additives, are processed and added to an aqueous or a non-aqueous formulation, in order to enhance its viscosity, shear rate, yield stress etc. Rheology modifiers can be classified as natural, semi-synthetic or synthetic.

The term "natural" as used herein preferably refers to a compound or composition existing in nature. The term "natural" preferably also refers to a compound or composition existing in nature, the chemical structure of which has not been altered by human intervention. Natural rheology modifiers include casein, alginates, xanthan gum, locust beam gum, guar gum, tragacanth gum, konjac gum, gum arabic, tara gum, gellan gum, pectin, dextrin, cyclodextrins, polysaccharides and carrageenans.

The term "semi-synthetic" as used herein preferably refers to naturally occurring compounds which have been treated by chemical and other processes initiated by human agency. Semi-synthetic rheology modifiers include modified celluloses such as carboxymethyl cellulose, methyl cellulose, hydroxyethyl cellulose, hydroxypropyl cellulose and related derivatives.

The term "synthetic", as used herein, is preferably defined to mean pertaining to compounds formed through chemical processes and other processes initiated by human agency, as opposed to compounds formed by natural origin. Synthetic rheology modifiers include polyethylene glycol derivatives (PEGs), maleic anhydride copolymers, carbomers, polyacrylamides, copolymers of acrylic acid, N-vinylpyrrolidone, a cationic monomer (preferably N-vinylimidazole), and a hydrophobic monomer that may be a long-chain ester of methacrylic acid having an ethoxylated spacer chain etc.

Rheology modifiers are used in fluid or semi-solid formulations such as cosmetics and personal care products, home care products, health care products, foods, ink, paints and coatings. As used herein, the term "formulation" preferably refers to the composition of an end product, preferably a fluid product. As these formulations comprise aqueous solutions or water-based suspensions, they are considered aqueous systems. The term "aqueous system" as used herein, is preferably intended to describe any system which contains water in any physical state, including water which contains one or more dissolved or dispersed substances. The rheology modifiers maintain the stability of the formulations against settling over the storage period and thicken the aqueous system in which they are used. These formulations benefit from improved shelf stability, ease of application, open time / wet edge and sagging.

In recent times, there has been a consumer and regulatory push to replace synthetic ingredients - not only in cosmetics but in all consumer products - with raw materials of natural origin or to develop formulations composed partially or fully of natural ingredients. Natural cosmetic raw materials have the advantages of being more biocompatible, less toxic and more easily biodegradable as compared to their synthetic counterparts.

Examples of natural raw materials used in place of synthetic rheology modifiers include various natural gums such as casein, alginates, xanthan gum, locust beam gum, guar gum, tragacanth gum, konjac gum, gum arabic, tara gum, gellan gum, pectin, dextrin, cyclodextrins, polysaccharides and carrageenans as well as modified starches. Natural gums for example are used in ketchup to provide shear thinning properties (Sahin, H., & Ozdemir, F., Effect of Some Hydrocolloids on The Rheological Properties of Different Formulated Ketchups. Food Hydrocolloids, 2004, 18, 1015-1022*).* These raw materials have often been dismissed as adequate alternatives to synthetics, as they often have poor functionalities and lead to formulation instabilities when used in the known compositions. These gums also behave diversely in water in terms of their solubility, water-holding capacity, rheology, thermodynamic properties, angle of response, bulk density and coefficient of friction. Moreover, the use of natural gums has been noted to have an adverse effect on the sensory profile of the end formulation. The stabilization and suspension of active ingredients in personal care and home care product formulations can be challenging. Without the necessary stabilization, the products can suffer from formulation breakdown phenomena such as flocculation and coalescence.

For instance, natural gums are water soluble (miscible) and confer high viscosity to a fluid at a low concentration. However, the viscosity is directly proportional to the temperature condition of dissolution and the rate of cooling. At low dissolution temperatures, the conformation is in an ordered state and vice-versa. When the salt concentration is also low, the viscosity of the formulation drops down because of intermolecular ionic repulsion. Above certain salt concentrations however, e.g., >0.1%, the viscosity becomes salt independent. As a consequence, the use of xanthan gum as a rheology modifier is preferred for ion-containing solutions.

Locust gum, being natural, is partially soluble in cold water, even at ambient temperature and has a tendency for its polymer chains to aggregate into a 3D polymeric network, forming a weak gel. This will not show the long, stringy rheology of entangled networks and will not flow smoothly when sheared. However, locust bean gum forms viscous shear-thinning weak gels and it can readily form elastic gels by interaction with other hydrocolloids such as carrageenan. The synergistic gelling originates from the steadiness of the K-carrageenan network by the mannan chains of locust bean gum. Further, the interface with other macromolecules prevents gel syneresis on storage. The inventors have recognized that there is a need for a rheology modifier providing the benefits of locust gum while enabling smooth flow in fluids which are intended for an easily controllable application, for example, cosmetics.

Konjac gum, a traditional agricultural food ingredient, has a high molecular weight and accounts for high viscosity in solutions, making it a good thickener for food and cosmetic products. At high concentrations of konjac gum, when combined with other natural gums, a strong, elastic gel is formed which is freeze-thaw stable and has a low syneresis. The inventors have recognized that there is a need for a rheology modifier providing the benefits of konjac even when used in relatively low concentrations.

Researchers (William, P. A.; Phillips, Gyln O.; "Overview of the Hydrocolloids", In Gums and Stabilizer for the Food Industry, Vol 13. RSC publ, Oxford, p13-30) have used konjac gum, which forms a highly viscous dispersion without the influence of salts, to form thermally irreversible gels with alkalis. This has been applied in food applications, such as in noodles and jelly dessert (Toba S.; Yoshida H.; Tokita T.; Konjac Mannan Containing Reversible Gel, 1987, US 4676976A). At least one study depicts the alteration in the stimuli-responsive behavior with the effect of temperature, pH, NaCl, ethanol onto the swelling properties of mixture of natural gums forming a complex gel. Both the degree and speed of swelling was found to decrease with the increase in temperature in the range 20 - 40 °C (Dan, H.; Yinglong, W., Modern Food Science and Technology, 2006). Research reveals an exemplary body scrub formulation comprising konjac flour and H. macroloba (3%) (Formulation and characterization of body scrub using marine alga Halimeda macroloba, chitosan and konjac flour, Ervina, A.; Santoso, J.; Prasetyo, B. F.; Setyaningsih, I.; Tarman, T., IOP Conf. Ser.: Earth Environ. Sci. 2020, 414, 012004), retaining moisture of 58.49-75.15%, having a viscosity 10,106.67-14,900.00 cPas, a pH of 6.48 - 6.93, whiteness 67.74% - 95.96%, and a spreadability of 1.63 - 2.17 cm.

Whilst natural gums can provide some important rheological properties, viscosity effect is often highly functional or dependent on electrolyte concentrations and temperature. Therefore, the properties of these gums alone are not suitable for adjusting the rheology of a wide variety of fluid products to aid controlled flow and stability without being overly sensitive to system conditions such as the presence or absence of local electrolytes.

In addition to the functional limitations, rheology modifiers also provide formulators with high control over the viscosity, suspension and texture of advanced personal care and home care fluid products. For formulators and manufacturers, the rheology modifiers such as thickening and suspension polymers can provide, indeed ensure, long-term stability to the products put on the shelves. Nevertheless, in personal care products, there is an increasing tendency for consumers to be skeptical of the presence of unfamiliar ingredients and additives in these products. Especially for consumers with sensitive skin, the need for personal care products with a high degree of biocompatibility and low risks of irritation is increasing. Awareness of the risks related to carcinogens, metallic opacifiers and potential allergens has increased. As a result, various brands have emerged to fill this need, offering personal care products which are labelled as natural, pure or simple.

However, consumers may not be fully aware that popular and beneficial natural ingredients such as honey, tea tree oil, peppermint oil and so on can be irritating to the skin when used in pure form. Such ingredients need to be mixed with carriers or diluents, wherein the mixture should remain stable for the shelf life of the product. Personal care products comprising these ingredients tend to either use non-natural additives to adjust the rheology of diluted solutions and emulsions - thereby compromising their promise of being fully natural - or to fail to achieve the high viscosities and stabilities of their non-natural competitors. Alternative natural products are therefore often much runnier than expected by consumers, being more difficult to apply evenly to the skin and having a lower shelf life. A runny texture can further give the impression of dilution, low quality and low value for money. It is therefore identified that there exists a strong need for products which are fully or to a high degree natural and biocompatible whilst achieving the desirable viscosities and stabilities of their non-natural counterparts.

In recent years, there has also been a high demand for a rheology modifier of sustainable origin which may also be safely disposed of in a biodegradable manner. Consumers and regulators are now more likely to take a cradle-to-grave approach in assessing the environmental impact of a product, including the method of harvesting its raw materials as well as its processing, distribution, use and disposal. Commercially available natural raw materials are a fascinating alternative to synthetic rheology modifiers not only due to their improved biocompatibility but also their easy biodegradability and lower environmental impact as compared to synthetic compounds.

As an example of the background art, JP2017222594A identifies the use of a fermented cellulose to improve the emulsification properties of an oil-in-water cosmetic emulsion. The fermented cellulose offered environmental benefits over plant cellulose, being harvestable in vitro without deforestation. It was also found to provide improved functional properties, thought to be at least partly due to its longer polymer length and higher purity. The fermented cellulose was however found to provide only a relatively low viscosity of 1000 mPas at 25 °C. Inventor of patent further proposes the use of both fermented cellulose and a gum, such as xanthan gum, to improve the homogeneity and stability of an emulsion. The achieved viscosities and the solubility of the cellulose in the emulsion remained low. Particularly for applications in thick products such as toothpastes and skin creams, the composition had a low suitability as a rheology modifier. In general, various fluid formulations require viscosities of 10,000 mPas or more for application, therefore fermented cellulose-based emulsifier of the prior art had only a limited functionality as a rheology modifier.

It is known that in cosmetics the product pH impacts biocompatibility and the user experience. It is highly desirable for cosmetic products to have stable pH in addition to stable textural and rheological properties. Rheology modifiers on the market have not adequately provided pH stability while being natural, biodegradable and providing a wide range of viscosities in various aqueous systems. Thus, there is a need for a natural rheology modifier which overcomes the functionality issues of the prior art whilst also being biodegradable, having a low overall environmental impact and a stable pH.

### SUMMARY OF THE INVENTION

An objective of the present invention was to overcome the disadvantages of the prior art and to provide a biodegradable rheology modifier which could provide a range of viscosities, was pH-stable, and manufactured from renewable materials. A further objective of the present invention was to provide a fluid product comprising the biodegradable rheology modifier, wherein the fluid product is preferably a cosmetic product, a pharmaceutical product, an ink, a paint, a coating or a food product. The fluid product may further preferably be or comprise a personal care composition, a home care composition, a health care composition or a pharmaceutical composition as mere examples. Furthermore, an objective of the present invention was to provide an improved method of manufacturing the biodegradable rheology modifier and fluid product, the improved method being more sustainable than the methods of the prior art.

The problem is solved by the features of the independent claims. Preferred embodiments of the present invention are provided by the dependent claims.

The invention relates to a biodegradable rheology modifier for use in a fluid product or formulation, the biodegradable rheology modifier comprising a bacterial cellulose. The bacterial cellulose is surface-modified and comprises at least one carboxyl group or a derivative thereof, wherein the biodegradable rheology modifier further comprises at least one natural gum. The surface-modified bacterial cellulose interacts with the natural gum to increase the viscosity of the fluid product.

The term "rheology modifier," as used herein, preferably refers to an additive that influences viscosity at high and/or low shear rates and may also contribute to adjusting the consistency of a coating composition. As used herein, the term "biodegradable" refers preferably herein to the property of being able to be broken down, chemically, physically or biologically, in a biological environment leaving no toxic residues. Preferably the term "biodegradable" refers to that type of degradability which is brought about by living organisms, usually microorganisms such as bacteria and fungi.

As used herein, a "carboxyl group" (-COOH) is preferably an organic functional group consisting of a carbon atom double-bonded to an oxygen atom and singly bonded to a hydroxyl group. The term "carboxyl group" as used herein may also refer to a carboxylate anion, preferably abbreviated to COO⁻. An organic compound comprising a carboxyl group (RCOOH) is preferably referred to as a carboxylic acid. A "derivative of a carboxyl group" is preferably a carboxyl group in which the hydroxyl group has been modified or replaced. Preferably a new group formed comprises an acyl group (RCO⁻) in addition to an ion or group which replaces the hydroxyl group. Examples of derivatives of carboxyl groups are carboxylates, amides, thioesters, esters, anhydrides and salts of carboxylic acids. Particularly preferably the derivative of a carboxyl group forms a salt or an ester. As an example, the hydrogen atom of the hydroxyl group may be substituted in the carboxyl group, as in the example of -COO⁻ Na⁺ forming a salt.

As used herein, a "fluid" is preferably a substance that deforms continuously when acted on by a shearing stress of any magnitude. A "fluid" is preferably also a substance which deforms continuously when acted on by a shearing stress exceeding a critical value. Fluids preferably include such substances as liquids, including (non)-aqueous solutions, (non)-aqueous suspensions, deformable gels, semi-solids and materials which flow only when a stress exceeding the relevant yield stress is applied.

As used herein, a "fluid product" is preferably a substance or composition which is in fluid form during manufacture, transport, storage, sale or at the point of use. For example, a "fluid product" may be a skin cream, a toothpaste, a paint or a shampoo, ketchup, mayo or any other product of interest for the application of a rheology modifier. A "fluid product" in the sense of the invention may also be a product sold in a non-fluid form but intended for use - at least temporarily - in fluid form. For example, a paint which is provided as a powder at the point of sale may be considered a fluid product if it is intended for being suspended or dissolved in water or oil at the point of use and then dries to become a solid after use. Similarly, a shampoo sold as a solid bar but intended for use in fluid form as an emulsion or foam is preferably also a fluid product in the sense of the present invention.

A "fluid product" in the sense of the invention may preferably belong to the group of: personal care products, home care products, laundry or detergent products, agro formulation products, pharmaceutical products, inks, paints, coatings or food products.

The term "personal care composition" as used herein preferably means compositions, including but not limited to cosmetics, toiletries, cosmeceuticals, beauty aids, personal hygiene and cleansing compositions for application to the body, including the skin, hair, scalp, and nails, of humans and animals.

The term "home care compositions" as used herein preferably means compositions including, but not limited to, compositions for use in a domestic household for surface cleaning or maintaining sanitary conditions, such as in the kitchen and bathroom, and laundry products for fabric care and cleaning, and the like.

The term "health care compositions" as used herein preferably means compositions including but not limited to pharmaceuticals, pharmacosmetics, oral care compositions, such as oral suspensions, mouthwashes, toothpastes, and the like, and over-the-counter compositions for external application to the body, including the skin, scalp, nails, and mucous membranes of humans and animals, for ameliorating a health-related or medical condition, or for generally maintaining hygiene or well-being.

The term "food compositions" as used herein preferably means compositions including but not limited to food applications where rheology modifiers are used to enhance function, flavour, improved shelf-life and color. The product is preferably stable over a wide range of temperature and pH including freeze thaw conditions (food brought to room temperature from freeze state). However, rising emphasis on health and nutrition, especially the growing need to curb the global burden of obesity, diabetes, and food allergies is driving the demand for fat substitutes. Several hydrocolloid-based stabilizers are now being produced only as texturisers and emulsifiers in food formulations. Hydrocolloids are widely used in food products to keep food fresh even after freezing and to prevent staling. These chemicals help with storage by increasing water retention capacity and preventing ice crystal formation during frozen storage. The hydrocolloids are also added in formulations to prepare emulsions like mayonnaise, stabilising food particles especially in dairy and juice formulations and control rheology of products like creams, sauces, soups etc. Such hydrocolloids may preferably be fully or partially replaced by the rheology modifier of the invention.

As used herein, a "bacterial cellulose" is preferably a cellulose synthesized by a bacteria and is also referred to as a "microbial cellulose". Suitable bacteria known to experts in the field include but are not limited to *Gluconacetobacter xylinus* and *Acetobacter xylinum.* Bacterial cellulose is preferably characterized by a crystalline nano-fibre structure which preferably creates a large surface area to mass ratio which can retain more fluid than plant cellulose. Preferably, bacterial cellulose nano-fibres have a diameter between 20 - 100 nm. The crystalline cellulose nano-fibre structure is herein interchangeably referred to as "cellulose nanocrystals".

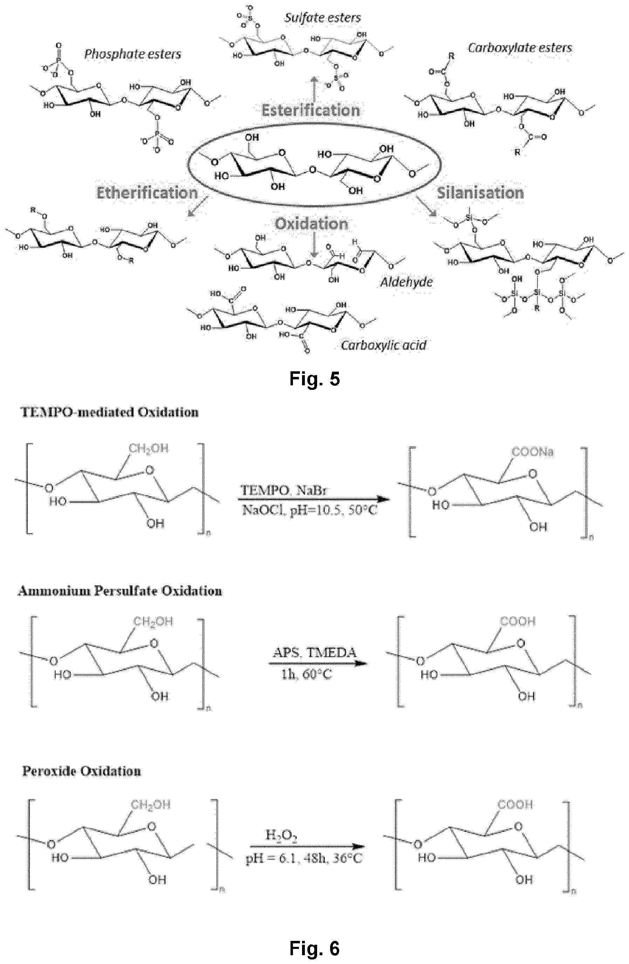

As used herein, a "surface modification" is preferably a method of changing the chemical structure and/or state of a particle, in particular a nanoparticle or microparticle, by chemical reaction or chemisorption. Surface modifications may preferably be used to change the hydrophobicity, hydrophilicity, electrical conductivity, reflectivity and other properties of a nanoparticle. A "surface modification" may preferably introduce a functional group in the structure of the particle, for example by a substitution reaction. Examples of surface modifications are esterification, sulfonation, oxidation, carboxylation, silylation and polymer grafting. Some of these examples are illustrated schematically in Fig.5.

As used herein, a "surface-modified bacterial cellulose" is preferably a cellulose synthesized by a bacteria and subjected to a surface modification such that the cellulose molecules preferably comprise a functional group due to said surface modification.

As used herein, a "natural gum" preferably refers to naturally occurring polysaccharides, one property of which is the ability to thicken a solution or suspension, i.e., being capable of causing a measurable increase in viscosity of a solution or suspension to which they are added. Non-limiting examples of such gums include agar, locust beam gum, sodium alginate, starch, locust beam gum, tara gum, curdlan, pullulan, welan gum, pectin, dextrin, cyclodextrins, rosin, sclerotium gum, dammar gum, gellan and carrageenan (both from seaweed), β-glucan (from oat or barley bran), chicle gum (from the chicle tree), okra (from pods of a plant native to Africa), galbanum resin (gum resin from a perennial herb), xanthan gums (each from bacterial fermentation), glucomannan (from the konjac plant), guar gum (from guar beans), gum arabic (from the sap of Acacia trees), gum ghatti (from the sap of anogeissus trees), gum tragacanth (from the sap of Astragalus shrubs), karaya gum (from the sap of Sterculia trees), etc. A natural gum is preferably used substantially in the same chemical form in which it occurs in nature, for example having the chemical structure produced by the relevant organism from which it is harvested.

As used herein, an "interaction" between components, for example the interaction between a surface-modified bacterial cellulose and a natural gum, preferably refers to the creation of intermolecular or electrostatic forces between the molecules of the components. Examples of such interactions preferably include the introduction of, increase or decrease in the number or strength of: dipole-dipole interactions, van der Waals forces, london dispersion forces and hydrogen bonds between the components. It may be preferred that the interaction between components results in an increase in the strength of intermolecular attractions between the components, in particular hydrogen bonds.

As used herein, the term "viscosity" preferably refers to a measure of the resistance of a fluid to deformation. Viscosity preferably quantifies the internal frictional force between adjacent layers of fluid that are in relative motion. Unless indicated otherwise, the term "viscosity" used herein preferably refers to the dynamic viscosity, also known as absolute viscosity.

The fabrication of formulations by the addition of natural gums (guar, arabic, konjac, locust, xanthan, carrageenan etc.) or their combinations in surface modified bacterial cellulose contributes to the increase in viscosity. The components (natural gum and surface modified bacterial cellulose) contribute synergistically to the increase in viscosity in the final formulation. That is, the increase in viscosity observed when a mixture of both components is used exceeds the sum increase in viscosity observed when each component is used alone. It was surprisingly found that the resulting rheology modifier comprising these components could dramatically increase the viscosity of a formulation when added in small amounts. Not only does this reduce the manufacturing costs of the formulation but also allows for formulations having a smaller proportion of additives compared to active ingredients. Such formulations can be used in products such as personal care or food products where end users tend to be skeptical of additives and show a preference for products labelled "simple", "free of harsh chemicals" or up to a given percentage "pure".

Bacterial cellulose, a raw material for the biodegradable rheology modifier, undergoes a surface modification that meets the requirements for green chemistry. This ultimately achieves the objective of replacing non-biodegradable product components.

By using bacterial cellulose in the rheology modifier, the process of manufacturing the rheology modifier could be made more sustainable when taking a cradle-to-grave approach. As the need for plant cellulose could hereby be dispensed with, the production of the inventive rheology modifier does not require the felling of any trees. Furthermore, bacterial cellulose could be biodegraded at a much faster rate than plant cellulose without leaving any residues. Indeed, it was found that 100% biodegradation of carboxylated bacterial cellulose could be achieved within 60 days. The production and disposal of bacterial cellulose could therefore be configured as a zero-waste cycle.

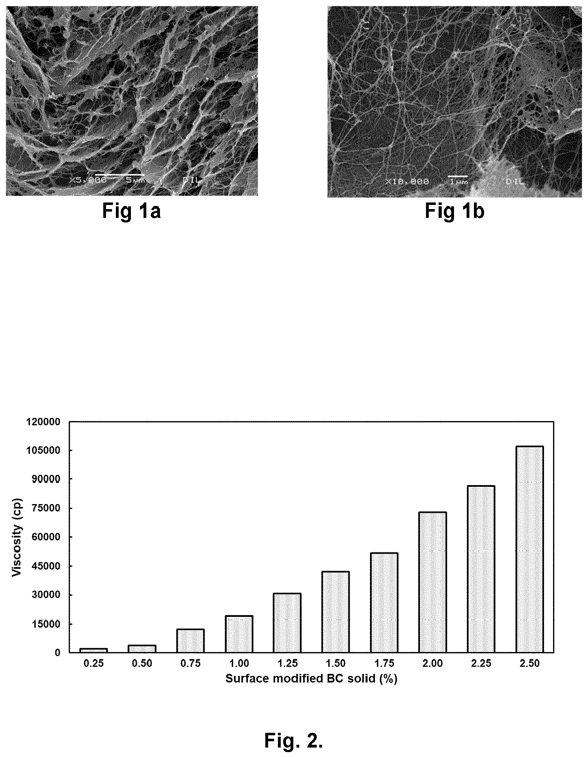

It was also surprisingly found that by using bacterial cellulose, very fine fibres with a higher surface area and thus a higher reactivity could be provided. As shown in Fig. 1, the fibres also tended to form networks which increased the stability and water-retention of bacterial cellulose. It is known that using carboxylated bacterial cellulose, its solubility in aqueous media was greatly increased, increasing also its contact and intermolecular interactions with other components such as the natural gum. Natural gums are soluble in water at least partly due to functional groups such as carboxyl groups in their polymer chains. Without wishing to be limited by any theory, it is thought that hydrogen-hydrogen bonds occur between the carboxylated bacterial cellulose and the natural gum, increasing the homogeneity and stability of a suspension containing these components. The suspension could therefore remain well-mixed for a long period of time. Furthermore, the interaction between these components leads to a dramatic increase in viscosity when used in a solution or suspension, particularly in an aqueous system most likely due to an interpenetrating network formed between bacterial cellulose and natural gums.

Bacterial cellulose is highly biocompatible and offers various benefits to the skin such as increasing skin hydration due to its high water-holding capacity. Direct contact between bacterial cellulose and human skin led to no irritation or allergic reactions. It was surprisingly found that when bacterial cellulose was carboxylated and used with natural gums in the inventive rheology modifier, its high biocompatibility was retained. No adverse effects could be detected by using the bacterial cellulose in this modified form.

The rheology modifier of the invention was very effective in increasing the viscosity and stability of a formulation. When used in fluid products, this could lead to a much higher shelf-life as suspended components had a lower tendency to settle. Furthermore, the haptic quality of formulations could be improved by increasing the viscosity. For example, skin creams could be made thicker such that they were easier to apply on the skin and gave the impression of a concentrated, "rich", high-quality product. The biodegradable rheology modifier was further found to significantly slow down the destabilization of emulsions. Formulations comprising different phases (o/w or w/o emulsions) remained stable for a longer period of time when the rheology modifier was used as an additive. This enabled the development of personal care products which meet the market demand for safe, biodegradable and biocompatible ingredients whilst being able to compete with the textural and haptic qualities of traditional products.

In a preferred embodiment of the invention, the natural gum is selected from the group comprising: sodium alginate, starch, xanthan gum, locust bean gum, guar gum, tragacanth gum, konjac gum, gum arabic, tara gum, gellan gum, curdlan, pullulan, welan gum, pectin, dextrin, cyclodextrins, rosin, sclerotium gum, carrageenans and mixtures thereof. These gums were found to interact surprisingly well with the surface modified bacterial cellulose and to synergistically increase the viscosity of an aqueous solution to which they are added. Furthermore, these gums were found particularly safe when used on human skin.

Moreover, these natural gums could be harvested in a sustainable manner, increasing the overall sustainability of the final product. The harvest of natural gums does not typically require felling of trees or deforestation. Rather, many gums such as gum Arabic can be harvested from acacia trees by traditional methods which discourage the respective local communities from felling the trees.

Preferably, the natural gum was selected for being responsive to stimuli. Preferably the stimuli belong to the group comprising: temperature, pH, light, electrical fields, electrostatic forces and combinations thereof. Those skilled in art are aware of which gums are responsive to the relevant stimuli. These gums advantageously form stimuli-responsive hydrogels in an aqueous system. The properties of such hydrogels can change depending on local environmental conditions such as temperature and pH. Stimuli-responsive hydrogels find a wide variety of special applications including drug delivery, gene delivery, and tissue regeneration, making them particularly advantageous when used in pharmaceutical or cosmeceutical products or food products.

In a further preferred embodiment of the invention, the biodegradable rheology modifier comprises at least one of the natural gums selected from the group comprising: xanthan gum, konjac gum, guar gum, locust bean gum, carrageenan gum etc. In further preferred embodiments of the invention, the biodegradable rheology modifier comprises at least two gums, at least one of the gums preferably being selected from the group comprising: xanthan gum, konjac gum, guar gum and locust bean gum. It was found that the use of at least two gums could synergistically improve the rheological properties of the rheology modifier. For example, the viscosity of konjac gum is synergistically enhanced by the addition of xanthan gum. Without intending to be limited to a particular theory, it is thought that the synergistic effect results from an increase in hydrogen bonds between the types of gum and the surface modified bacterial cellulose.

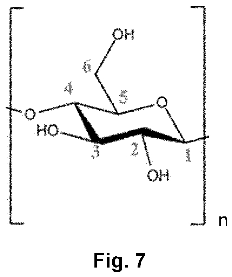

In a further preferred embodiment of the invention, the surface modification is obtained by carboxylation of one or more primary alcohol groups, preferably at the C6 positions, of the bacterial cellulose. Cellulose is preferably characterized as a high-molecular-weight linear homopolysaccharide of β-1,4-linked anhydro-D-glucose units (hereinafter: monomers) in which every monomer is corkscrewed 180° with respect to its neighbors. Each monomer comprises three hydroxyl ("-OH" or "alcohol") groups. These are located at the C2, C3 and C6 positions as shown in Fig. 7. The alcohol groups at the C2 and C3 positions are considered "secondary alcohol" groups as they are bonded to two carbon atoms. The alcohol group at the C6 position is considered a "primary alcohol" group as it is bonded to only a single carbon atom. In a preferred oxidation of the primary alcohol group at the C6 position, the alcohol group is substituted by a carboxyl group or a derivative thereof. Preferably, a position-selective oxidation technique is used to oxidize the primary alcohol groups at the C6 positions in a targeted manner.

In a further preferred embodiment of the invention, the bacterial cellulose comprises a plurality of monomers and at least one carboxyl group or derivative thereof is present in at least 70%, preferably at least 80%, 90% or more of the monomers of the bacterial cellulose. In some embodiments the at least one carboxyl group is present in at least 95%, at least 99% or 100% of the monomers of the bacterial cellulose. It was found that such a degree of carboxylation could achieve high solubility of the cellulose in water and could synergistically increase the viscosity of an aqueous solution by interacting with the at least one natural gum.

In a further preferred embodiment of the invention, the ratio of surface modified bacterial cellulose to natural gum is between 4:1 and 3:7, preferably between 3:2 and 2:3, more preferably around 1:1. It may be preferred that the ratio of surface modified bacterial cellulose to natural gum is between 6:5 and 5:6. It was surprisingly found that at the mentioned ratios, the synergy between the two components could be maximized and the interactions between them increased when used in a fluid formulation.

In a further preferred embodiment of the invention, the biodegradable rheology modifier further comprises an antimicrobial agent, preferably selected from the group comprising: alkali or alkaline earth metal salts, more preferably comprising sodium benzoate, sodium metabisulphite, an antioxidant and mixtures thereof. The antimicrobial agent also increased the lifetime of the end products in which it was used, in particular after opening the packaging containing the product. Furthermore, the selected antimicrobial agents were also useful for adjusting the pH of the rheology modifier. Preferably, the concentration of the antimicrobial agent in the biodegradable rheology modifier was such that its concentration in a fluid product was up to 1 w/w%. It may also be preferable for the antimicrobial agent to be added to the fluid product directly without forming part of the rheology modifier.

In a further preferred embodiment of the invention, the pH of the biodegradable rheology modifier is set by means of a buffer to be in the range of 3 -13, preferably 4 -10. The buffer is preferably a phosphate, a citrate, carbonic acid, a bicarbonate buffer, a combination thereof or any buffer of the prior art which is known to control the pH. It may also be preferable for the buffer to comprise citric acid or sodium hydroxide. The buffer could advantageously stabilize the pH of the rheology modifier and the formulation in which it was used. The buffer may form part of the composition of the inventive rheology modifier, for example by being present in powder form or in suspension with the remaining components. Alternatively, or additionally, the buffer may be added directly to the fluid product. Preferably, a concentration of the buffer in the fluid product is up to 1 w/w%.

In a further preferred embodiment of the invention, the cellulose is ground before surface modification. The ground bacterial cellulose was more reactive and could be carboxylated to a high degree. At the same time, the ability of the cellulose to form networks in an aqueous system was retained. This increased the interaction between the cellulose and natural gum when used in a formulation. By finely grinding the cellulose, the formulation could also be made visually and texturally homogeneous, providing a good user experience. In a further preferred embodiment of the invention, the biodegradable rheology modifier is provided in a granular or suspended form with a particle size between 1 µm - 1000 µm, preferably between 1 µm - 500 µm, more preferably between 1 µm -100 µm. By providing the rheology modifier in granular form, for example as a powder, it could easily be stored and measured for use in various applications mentioned elsewhere in this text. On the contrary, the rheology modifier in a suspended form, its solution or suspension is advantageous to allow the formulation to become homogeneous more quickly. Else, in production the suspension could directly be pumped or flowed to a manufacturing station in which the formulation was prepared.

In a further preferred embodiment of the invention, the bacterial cellulose is ground to a particle size up to 1000 µm, preferably between 1 µm - 500 µm, more preferably between 1 µm - 100 µm, before surface modification and mixing with the natural gum to form the rheology modifier. The solubility and dispersibility of the bacterial cellulose could be advantageously maximized by grinding to these sizes. As used herein, the term "granular" preferably means a powder. Preferably the carboxylation and mixing occur in aqueous conditions.

In a further aspect, the invention relates to a fluid product comprising the biodegradable rheology modifier described above.

In a preferred embodiment of the invention, the concentration of surface modified cellulose in the fluid product is between 0.2 - 5 w/w%, preferably 0.5 - 2 w/w%, more preferably 1 - 1.5 w/w%. As used herein, a concentration expressed in "w/w%" preferably refers to the mass of a component as a percentage of the entire mass of a composition. At these concentrations, high viscosities could be achieved as demonstrated by the experimental examples set out herein. The concentration of the surface modified cellulose could thus be kept low in the fluid product whilst allowing the viscosity of the fluid product to be adjusted over a wide range of viscosities. A very viscous fluid product could thus be manufactured cheaply and sustainably, using only a small amount of the biodegradable rheology modifier. This also allowed greater degrees of freedom in adjusting other qualities of the fluid product such as its color and opacity.

In a further preferred embodiment of the invention, the concentration of gum in the fluid product is between 0.2 - 5 w/w%, preferably 0.5 - 2 w/w%, more preferably 1 - 1.5 w/w%. These concentrations of the gum were also found suitable for providing the desired high viscosities at low concentrations, as demonstrated by the experimental examples set out herein.

In a further preferred embodiment of the invention, the fluid product is a personal care product, a cosmetic product, a pharmaceutical product, a health care product, a home care product, a laundry or detergent product, an agro formulation product, an ink, a paint, a coating or a food product. In a preferred embodiment of the invention, the fluid product is a personal care product and is preferably selected from the group comprising lotions, creams, body washes, shampoos, serums, leave-on cosmetic products, fluids in wipes and emulsions. In a particularly preferred embodiment of the invention, the fluid product is a skin care product.

In a preferred embodiment of the invention, the fluid product further comprises one or more solvents, emollients, active pharmaceutical ingredients, dermatologically active ingredients, opacifiers, dyes, fragrances and/or preservatives.

In a further aspect, the invention relates to a method of producing a biodegradable rheology modifier comprising surface modification of cellulose by carboxylation to form carboxyl groups or a derivative thereof in the cellulose polymers and mixing of the surface-modified cellulose with a natural gum. The cellulose is preferably bacterial cellulose.

In a preferred embodiment of the invention, the method of producing the biodegradable rheology modifier comprises grinding of the cellulose before surface modification. Furthermore, the ground bacterial cellulose was more reactive and could be carboxylated to a high degree. At the same time, the ability of the cellulose to form networks in an aqueous system was retained. This increased the interaction between the cellulose and natural gum when used in a formulation. By finely grinding the cellulose, the formulation could also be made visually and texturally homogeneous, providing a good user experience.

Preferably the carboxylation and mixing occur in aqueous conditions. In a preferred embodiment of the invention, the method further comprises grinding of the cellulose before surface modification such that an average particle size of the cellulose in granular form is between 1 µm -1000 µm, preferably between 1 µm - 500 µm, more preferably between 1 µm - 100 µm.

In a further preferred embodiment of the invention, the grinding of the cellulose is carried out in the presence of hydrogen peroxide (HPO), such that the cellulose is additionally bleached. This allows the rheology modifier to be used in a wide variety of fluid products with minimal effect on the color of the end product. Furthermore, in many fluid products, a neutral color such as white is desirable.

In a further preferred embodiment of the invention, the surface modification of the cellulose is carried out in the presence of at least one catalyst, preferably selected from the group comprising:
- N-oxyl compounds, preferably TEMPO (2,2,6,6-tetramethylpiperidine-N-oxyl) or TEMPO derivatives (T1-T4) having at least one functional group at position C4,
- alkali metal halides, preferably KBr, NaBr or LiBr 16rabic16izidising agents, preferably oxygen, ozone, hydrogen peroxide (HPO), ammonium persulfate, potassium persulfate, sodium persulfate or potassium permanganate.

Particularly preferably the catalyst comprises TEMPO, the afore-mentioned TEMPO-derivatives, Hydrogen Peroxide (HPO) or Ammonium Persulfate. As used herein, the abbreviation "TEMPO" preferably refers to 2,2,6,6-tetramethylpiperidine-1-oxyl radical. TEMPO offers the advantage of being position selective such that oxidation occurs primarily at the C6 position of the cellulose monomers as well as being highly soluble in aqueous systems and highly efficient.

In some preferred embodiments, the surface modification is carried out in the presence of TEMPO, NaBr and NaClO, wherein TEMPO and NaBr act as co-catalysts and NaClO functions as a primary oxidant. It may also be preferred for ammonium persulfate to be used as a catalyst. Ammonium persulfate was found to be a good oxidant which also bleaches the cellulose, which may be desirable in some applications.

By carrying out the surface modification under alkaline conditions, the dissociation of primary alcohol groups in the aqueous system could be increased. The primary alcohol groups have a greater tendency to dissociate than secondary alcohol groups and so react to form carboxyl groups (or derivatives thereof) to a greater extent than the secondary alcohol groups in the cellulose chain.

Advantageously the above reaction conditions accelerate the desired carboxylation of the C6 primary alcohol group without requiring extremely high temperatures or concentrations, such that the reaction is commercially viable. It was also found advantageous that the reaction conditions did not substantially lead to unwanted side reactions or toxic or otherwise undesirable side products.

Terms such as substantially, approximately, about, etc. preferably describe a tolerance range of less than ± 20%, preferably less than ± 10%, especially preferably less than ± 5%, and especially less than ± 1%, and include the exact value.

### DETAILED DESCRIPTION OF THE INVENTION AND EXAMPLES

It should be understood that various alternatives to the embodiments of the invention described herein may be employed in practicing the invention. It is intended that the claims of the invention define the scope of the invention and that the method and apparatus within the scope of these claims and their equivalents be covered thereby.

The examples set out herein demonstrate that a rheology modifier comprising a blend of surface modified bacterial cellulose and a natural gum can achieve high viscosities (5,000-110,000 cP) with the viscosity remaining stable over a broad range of pH values while exhibiting shear-thinning behavior. The rheology modifier according to the invention was therefore able to meet the high standards of stability, viscosity and haptic quality whilst being natural, biocompatible and highly sustainable over its entire lifecycle.

Without intending to be limiting, the invention will be explained in more detail with reference to exemplary embodiments and the following figures:

### BRIEF DESCRIPTION OF THE FIGURES

- Fig. 1a, 1b: A morphological observation of a bacterial cellulose-based structure according to an embodiment of the invention by an SEM wherein the image (a) on the left is an SEM image of bacterial cellulose (x5,000) and (b) on the right is a SEM image of bacterial cellulose (x10,000). The images show a 3D network having an intact fibrous structure and a micro level diameter of 10µm (a) and 1µm (b).
- Fig. 2: Viscosities of surface modified cellulose at different concentration at neutral pH.
- Fig. 3: Rheological properties of a bacterial cellulose-based composite according to an embodiment of the invention by rheometer cone-plate. Viscosity versus shear rate in non-Newtonian form showing shear-thinning behavior is displayed.
- Fig.4: Viscosity and pH for a number of samples of bacterial cellulose-based composites according to two embodiments of the invention showing the stability of the formulated composites in acidic and basic media.
- Fig. 5: A schematic illustration of a variety of known surface-modification reactions for cellulose.
- Fig. 6: A schematic illustration of the reaction mechanisms of three preferred surface modification reactions of cellulose to manufacture the rheology modifier of the present invention.
- Fig. 7: A schematic illustration of a single monomer unit which forms part of the cellulose chain. The carbon positions C1 - C6 are labelled on the unit.

### DETAILED DESCRIPTION OF THE PREFERRED EMBODIMENTS

All exemplary methods of producing the inventive rheological modifier use bacterial cellulose as a raw material. In Figure 1a and 1b, shows a scanning electron microscope was used to examine the surface morphology of the materials. As observed, bacterial cellulose forms fine fibers having diameters of up to 10 µm. The freeze-dried samples were sputter coated with a thin layer of evaporated gold. The micrograph was taken at a magnification of 5000 and 10000 and an accelerating voltage of 25 kV. It shows an intact fibrous structure, the solid materials in the composite stay forming a 3D fibrous network in a non-homogeneous dispersion. These are particularly suited for improving the stability of a slurry, suspension, emulsion or solution as the network counteracts the tendency of system components to settle. The network structure also increases the water retention of the bacterial cellulose, improving the performance of skin care products in which it is used.

In a further preferred embodiment of the invention, surface modification of the cellulose is carried out in the presence of at least one catalyst, preferably selected from the group comprising: TEMPO (T1), 2,2,6,6-tetramethylpiperidinooxy radical and its derivatives namely, 4-(acetamino)-2,2,6,6-tetramethylpiperidinooxy (T2), 2,2,6,6-tetramethyl-4-oxopiperidinooxy (T3), 4-hydroxy-2,2,6,6-tetramethyl-1-piperidinoxy (T4), Hydrogen peroxide (HPO), and ammonium persulfate. TEMPO offers the advantage of being position selective such that oxidation occurs primarily at the C6 position of the cellulose monomers as well as being highly soluble in aqueous systems and highly efficient. In some preferred embodiments, the surface modification is carried out in the presence of TEMPO, NaBr and NaClO, wherein TEMPO and NaBr act as co-catalysts and NaClO functions as a primary oxidant.

It may also be preferred for ammonium persulfate to be used as a catalyst. Ammonium persulfate (APS) was found to be a good oxidant which also bleaches the cellulose, which is also desirable in some applications. Ammonium persulfate was also found to be especially advantageous as it is harmless from a toxicological perspective. It can also be manufactured from natural materials and safely disposed of, making it highly sustainable. The use of hydrogen peroxide (HPO) may also be preferred. HPO also provided a bleaching effect whilst being a strong oxidant. There are several catalysts and co-catalysts known in art for surface modification of cellulose. However, the reaction yields, product characteristics and porous or fibril structure varies from conditions used for modification. Herein the process is optimized in each category for desired application, preferably rheology or polymer modifiers. Bacterial cellulose (BC) was surface modified chemically by following a catalytic oxidation reaction with different modifiers. This reaction converts 1°-alcoholic groups (-CH2OH) positioned in 6 of bacterial cellulose structure to -COOH groups (carboxylation) keeping rest of the bacterial cellulose structure the same and thus the occurrence can be defined as surface modification. The surface modification of bacterial cellulose was implemented by using oxidation technique set by Akira Isogai and et. al (Akira Isogai, Tsuguyuki Saito and Hayaka Fukuzumi, TEMPO-oxidized cellulose fibers, Nannoscale, 2011, 3, 71-85; TEMPO-Mediated Environmentally Benign Oxidation of Primary Alcohols to Carboxylic Acids with Poly[4-(diacetoxyiodo)styrene], Yousuke Tashinoa, Hideo Togo, Synlett 2004 (11): 2010-2012). In this case, NaOH was used to maintain the basicity of the reaction medium and thus -COOH groups appear in the aqueous system as -COONa as represented by Fig. 7. Various TEMPO-mediated surface modification reactions of mono-, oligo- and polysaccharides for regioselective conversion of primary hydroxyls to carboxylate groups have been reviewed elsewhere (A. E. J. de Nooy, A. C. Besemer and H. van Bekkum, Selective oxidation of primary alcohols mediated by nitroxyl radical in aqueous solution. Kinetics and mechanism Tetrahedron, 1995, 51, 8023-8032; P. L. Bragd, H. van Bekkum and A. C. Besemer, TEMPO-Mediated Oxidation of Polysaccharides: Survey of Methods and Applications, Top. Catal., 2004, 27, 49-66). In addition to the aforementioned, modification of bacterial cellulose using solid-supported TEMPO (Fey, T., Fischer, H., Bachmann, S., Albert, K. & Bolm, C. Silica-supported TEMPO catalysts: synthesis and application in the Anelli oxidation of alcohols. J. Org. Chem. 66, 8154-8159 (2001); Karimi, B. & Farhangi, E. A highly recyclable magnetic core-shell nanoparticle-supported tempo catalyst for efficient metal- and halogen-free aerobic oxidation of alcohols in water. Chem. Eur. J. 17, 6056-6060 (2011)) and polymerized TEMPO (Dijksman, A., Arends, I. W. C. E. & Sheldon, R. A. Polymer immobilised TEMPO (PIPO): an efficient catalyst for the chlorinated hydrocarbon solvent-free and bromide-free oxidation of alcohols with hypochlorite. Chem. Commun. 271-272 (2000)), and TEMPO derivatives grafted to other water-soluble polymers was found to be promising.

### Comparative Example 1

In a preferred embodiment of the invention surface modification or carboxylation of the bacterial cellulose was mediated additionally or alternatively by TEMPO (T1), 2,2,6,6-tetramethylpiperidinooxy radical. This is illustrated schematically in Fig. 6. In a typical lab Experiment, bacterial cellulose suspension (5 g) was suspended in water (500 mL) containing TEMPO (0.50 mmol) and sodium bromide (5 mmol) was mixed thoroughly in an Erlenmeyer flask. The contents of the flask were maintained at 50 °C and pH was adjusted to 10. The TEMPO-mediated surface modification was started by adding the desired amount of the NaClO solution (10-16 mmol NaClO per gram of cellulose) as an oxidant. The reaction mixture was maintained to set conditions for additional 30-60 minutes and quenched by addition of ethanol. Surface modified cellulose was thoroughly washed, dried and stored at 4 °C. The yield of reaction was found to be more than 80 %. The carboxylate content of the surface modified cellulose was determined using titration method as represented in table 2.

### Comparative Example 2

In a preferred embodiment of the invention, surface modification of bacterial cellulose, a process of carboxylation, when mediated by APS is illustrated schematically in Fig. 6. The mixture resulting from this method was also found to be homogeneous without strings or sedimentation. No color change was observed over the period of storage of the mixture. In a typical lab experiment, to a 2L Erlenmeyer flask, 1 % aqueous suspension of bacterial cellulose transferred 20-50 mL of 1M ammonium per sulfate aqueous solution. Thereafter, temperature of the mixture was raised to 60°C and kept stirring for 1.5 h while maintaining the pH of mixture to 1.0 - 2.0. Modified bacterial cellulose was thoroughly washed, dried and stored at 4 °C. The yield of modified cellulose was found to be more than 50 %.

**Table 1: Analytical results of surface modified bacterial cellulose (powder)**

| **Property** | **Unit/Remarks** | **Example 1** | **Example 2** | **Example 3** |
|---|---|---|---|---|
| Physical appearance | - | Opaque | Opaque | Opaque |
| Dry percentage | w/w % | 99.80 | 99.80 | 99.00 |
| Particle size | Micrometer | ∼70 - 100 | ∼70 - 100 | ∼70 - 100 |
| Dry weight | Gram | 15.03 | 15.11 | 14.94 |
| pH | - | 7.0 | 7.0 | 5.0 |
| Viscosity of suspension in water (solid content) | Centipoise | ∼60000 (2.5%) | ∼70000 (2.0%) | ∼40000 (2.0%) |
| Biodegradable 100 % | Within 60 days (OECD 301 F) | 100 % | 100 % | 100 % |

**Table 2: Yield and carboxyl content of surface modified bacterial cellulose**

| **S. No** | **Tempo variants** | **Yield ^{a} (%)** | **Carboxylation (meq/100g)^{b}** |
|---|---|---|---|
| 1 | T1 | 80-90 | 40.50 |
| 2 | T1 | 80-90 | 39.06 |
| 3 | T2 | 70-85 | 26.80 |
| 4 | T2 | 70-85 | 40.50 |
| 5 | T3 | 70-85 | 37.09 |
| 6 | T4 | 70-85 | 39.30 |
| 7 | T4 | 70-85 | 40.50 |

| | | | |
|---|---|---|---|
| *^{a}: Gravimetric method, ^{b}: Modified Titration based on TAPPI method (*T 237 cm-98) | | | |

### Comparative Example 3

In a preferred embodiment of the invention, the carboxylation of the bacterial cellulose was mediated additionally or alternatively by HPO. This is illustrated schematically in Fig. 6. The mixture resulting from this method was also found to be homogeneous without strings or sedimentation. The process caused bleaching of the cellulose. No further color change was observed over the period of storage of the mixture. In a typical lab experiment, 10 g of bacterial cellulose was suspended with 2.0% (166.67 mL) of 12% hydrogen peroxide solution. Thereafter, 22.2 mL of 1M NaOH was added to the suspension (pH = 11) and temperature was raised to 80°C for 1.0 h. Modified bacterial cellulose was thoroughly washed, dried and stored at 4 °C until neutral. The yield of modified cellulose was found to be more than 50 %.

As seen from Table 1, surface modified bacterial cellulose was transformed to powder through inhouse inventive process in the required size domain for further processing. A 2.5% suspension of the liquid has shown to have very high viscosity. It was observed that viscosity of modified cellulose increases with the increase in concentration of modified cellulose. The modified bacterial cellulose was found to be 100 % biodegradable according to OECD 301F method. Table 2 indicates the yield and carboxylation value of the modified bacterial cellulose by TAPPI method (T237 cm-98). Details of said TAPPI (Technical Association of the Pulp and Paper Industry) method are well-known and easily available to the skilled person. On average the yield was in between 70-90 % depending upon the TEMPO derivative used.

Viscosity and pH Dependence:
Measurement of the dynamic viscosity of the mixture was carried out using an NDJ-8S Rotational Viscometer having series of spindles S1-S4. The measurement took place at standard conditions room temperature conditions. The mixture was found to be homogeneous without strings or sedimentation. No color change was observed while recording the measurement.

Preparation of Composites:
In a preferred embodiment of the invention, the product obtained upon modifying bacterial cellulose in formulation (mentioned in section below) behaved as biodegradable rheological modifier with >95% natural content. Composites of different composition comprising natural gums were prepared and examined for viscosity. The modified bacterial cellulose was found to be insensitive to electrolytes over a pH range of 4-10 indicating that its importance to personal care and home care applications where effect of electrolytes (especially alkali metal halides, e.g., sodium or potassium chloride, 0.1-0.5M concentration) would be rendered constant. It was also found that it was possible to enhance the appearance and further improve rheological properties of a formulation as per requirements using this sample.

**Table 3: Composites using different surface modified bacterial cellulose**

| **Function** | **Solid content (%)** | **pH** | **Viscosity (cP x 10³)** |
|---|---|---|---|
| Rheology Modifier 1 | 2.5 | 3-11 | 62-50 |
| Rheology Modifier 2 | 2.5 | 3-11 | 50-35 |
| Rheology Modifier 3 | 2.0 | 3-11 | 45-35 |

| | | | |
|---|---|---|---|
| Rheology Modifier 1: Bacterial cellulose from TEMPO and natural gum; Rheology Modifier 2: Bacterial Cellulose from APS and natural gum; Rheology Modifier 3: Bacterial Cellulose from HPO and natural gum | | | |

### Composites: Rheology Modifier (1-7)

A finely ground, modified 1.25-3.0 % bacterial cellulose suspension (comparative example 1-3) was mixed with at least one of the natural gums 1-4 (comprising either guar, arabic, konjac, locust, xanthan, carrageenan and other or combinations thereof) having total concentration of 1.25-3.0% as received or aqueous solutions to the mixture. The prepared mixture or slurry was further homogenized (20,000-30,000 rpm) for 15 minutes. Using a mild acid, pH of the slurry was maintained between 4 - 5. A uniform texture and highly thickened slurry were obtained, to which was added a preservative/stabilizer sodium benzoate to provide a concentration of 0.5% in the mixture in order to avoid microbial contamination and an antioxidant for long term stability.

**Table 4: Composites using different surface modified bacterial cellulose & natural gums**

| **Examples** | **Composition** | **Solid content** | **pH** | **Viscosity (cP × 10³)** |
|---|---|---|---|---|
| A | Rheology Modifier 3 | 0.1-3% | 3-11 | 55-35 |
| B | Rheology Modifier 4 | 0.1-3% | 3-11 | 34-58 |
| C | Rheology Modifier 5 | 0.1-3% | 3-11 | 35-20 |
| D | Rheology Modifier 6 | 0.1-3% | 3-11 | 50-25 |

| | | | | |
|---|---|---|---|---|
| Rheology Modifier 3: surface modified bacterial cellulose+ natural gum-1; Rheology Modifier 4: surface modified bacterial cellulose + natural gum-2; Rheology Modifier 5: surface modified bacterial cellulose (APS) + natural gum-3; Rheology Modifier 6: surface modified bacterial cellulose (APS) + natural gum-4 | | | | |

Application Preparation:
Rheology modifiers prepared were used in variety of applications to understand and evaluate the efficacy for personal care, coatings, and other applications in agriculture as shown below. The application areas are limitless and not limited to the ones shown below in the present application.

**Table 5: Different Applications Using Rheology Modifier.**

| **BODY SCRUB** | | **BODY LOTION** | | **HAND LOTION** | |
|---|---|---|---|---|---|
| Ingredient Function | (% w/w) | Ingredient Function | (% w/w) | Ingredient Function | (% w/w) |
| Solvent | 75.0 | Solvent | 70.8 | Solvent | 74.2 |
| Humectant | 4.0 | Humectant | 1.0 | Humectant | 1.0 |
| Rheology modifier 2 | 8.5 | Rheology modifier 1 | 9.7 | Rheology modifier 1 | 11.3 |
| Oil | 5.0 | Oil | 6.0 | Oil | 5.0 |
| Emulsifier | 1.0 | Emulsifier | 3.0 | Emulsifier | 1.5 |
| Antioxidant | 1.0 | Antioxidant | 0.5 | Antioxidant | 0.5 |
| Fragrance oil | 1.5 | Fragrance oil | 6.0 | Fragrance oil | 2.0 |
| Exfoliator | 3.0 | Emollient | 2.0 | Emollient | 3.5 |
| Preservative | 1.0 | Preservative | 1.0 | Preservative | 1.0 |

**Table 6: Results of different Applications Using Rheology Modifier.**

| **Studies** | **Control-1** | **Body Scrub** | **Control-2** | **Body Lotion** | **Control-3** | **Hand Lotion** |
|---|---|---|---|---|---|---|
| pH | 6.50 | 6.10 | 6.42 | 6.03 | 6.54 | 5.24 |
| Viscosity | 39476 | 105023 | 13143 | 12645 | 11970 | 24037 |
| Texture | cream, | Creamy viscous | Creamy & not quick absorbance | Light, quick absorption, sense of hydration on skin | Creamy & not quick absorbance | quick absorption, sense of hydration on skin |
| Odor | Neutral | Neutral | Neutral | Neutral | Neutral | Neutral |
| Stability | Stable | Stable | Stable | Stable | Stable | Stable |

**Table 7: Food Application Using Rheology Modifier.**

| **Ingredient** | **w/w%** | **Performance** | | |
|---|---|---|---|---|
| Water | 72.20 | **Attributes** | **Sensory rating** | **Remarks** |
| Almond Puree | 9 | Color | 4 | Colour has yellowish tint due to pea |
| Pea Protein | 3.8 | Aroma | 5 | Very good fermented aroma |
| Rheology Modifier (0.1-3%) | 6-15 | Texture | 4.5 | No visible syneresis looks firm, really set, appropriate for smoothing |
| Sugar | 3 | Taste | 4.5 | Fermented, no bitterness |

**Table 8: Agricultrural Application Using Rheology Modifier.**

| **Function** | **%w/w** | **Performance** | |
|---|---|---|---|
| Micronutrients | 1-15 | **Viscosity (cP)** | pH |
| Co-Solvent | 2.00 | | |
| Binder | 10.00 | | |
| Emulsifier | 2.5 | 1000-10000 | 9-10 |
| Filler | 10.00 | | |
| Rheology Modifier | 0.20 | | |
| Preservative | 0.10 | | |
| Solvent | 55-75 | | |

Viscosity and pH Dependence:
Measurement of the dynamic viscosity of the mixture was carried out using an NDJ-8S Rotational Viscometer having series of spindles S1-S4. The measurement took place at standard conditions room temperature conditions. The mixture was found to be homogeneous without strings or sedimentation. No color change was observed while recording the measurement.

Table 4 indicates the viscosities values obtained at a wide range of pH values (3-11). In general, the higher the consistency of modified bacterial cellulose along with lower pH, the higher will be the viscosity of the mixture obtained. The composite products showed a smooth, homogenous texture, no strings/limped form, no phase separation, no sedimentation and no color change with temperature. The viscosity building effect forms a stable cream with easily adjustable thickening. The samples were found to be suitable for the pH range 3-11 and not sensitive to electrolytes (0.1M NaCl tested). The samples were almost fully bio-based with a natural content >95%. Thus, samples could be applied as a premix, such as a powder. It was also found that it was possible to enhance the appearance and further improve rheological properties of a formulation as per requirements using these samples.

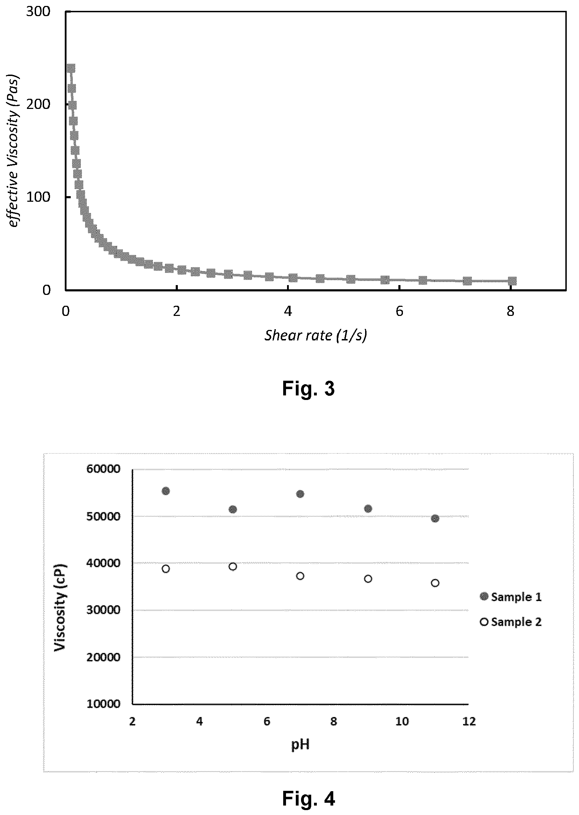

Fig. 3 shows the performance of a rheology modifier according to an embodiment of the invention at different shear rates. As can be observed in the figure, the viscosity had a tendency to drop dramatically with increasing shear rate. Thus, the rheology modifier could provide shear-thinning effects. These are especially beneficial in improving the user experience as they facilitate the release of a fluid product from a container and ease spreading, painting. At the same time, shear-thinning fluids tend to have a higher viscosity when no shear force is being actively applied. This allows them to sit and remain stable on a surface, for example on a wall in the case of paint during drying or on an end user's skin in the case of a skin care product. Thus, unwanted dripping effects are avoided and the user experience is improved. In this manner, the rheology modifier could be used to manufacture natural, biodegradable fluid products which could compete with traditional products in terms of haptic quality, texture and user experience.

Fig. 4 shows the stability of various samples of rheology modifiers according to the invention. The samples belong to two groups having two compositions according to two embodiments of the invention. Results for samples belonging to the first group are shown using a plus symbol and results for samples belonging to the second group are shown using a dot. As shown by the figure, the rheology modifiers performed well in terms of providing a high viscosity at a wide range of pH values. The viscosity of both groups of samples remained substantially the same in acidic and alkaline conditions. This indicates that the inventive rheology modifiers were suitable for use in a wide variety of applications, ranging from foods which tend to be acidic to cleaning products which tend to be alkaline.

## Claims

1. Biodegradable rheology modifier for use in a formulation or a fluid product, the biodegradable rheology modifier comprising a bacterial cellulose,
**characterized in that**
the bacterial cellulose is surface modified and comprises at least one carboxyl group or derivative thereof, wherein the biodegradable rheology modifier further comprises at least one natural gum, such that the surface-modified bacterial cellulose interacts with the natural gum to increase the viscosity of the formulation or fluid product.

2. The biodegradable rheology modifier of claim 1 wherein the surface modification is obtained by oxidation of one or more primary alcohol groups, preferably at the C6 positions, of the bacterial cellulose.

3. The biodegradable rheology modifier according to any of the previous claims, wherein the bacterial cellulose comprises a plurality of monomers and the at least one carboxyl group or derivative thereof is present in at least 70%, preferably at least 80%, 90% or more of the monomers of the bacterial cellulose.

4. The biodegradable rheology modifier according to any of the previous claims, wherein the biodegradable rheology modifier is provided in a granular or suspended form with a particle size between 1 µm - 1000 µm, preferably between 1 µm - 500 µm, more preferably between 1 µm - 100 µm and/or wherein the bacterial cellulose is ground to a particle size up to 1000 µm, preferably between 1 µm - 500 µm, more preferably between 1 µm - 100 µm, before surface modification and mixing with the natural gum to form the rheology modifier.

5. The biodegradable rheology modifier according to any of the previous claims, wherein the natural gum is selected from the group comprising: sodium alginate, starch, xanthan gum, locust bean gum, guar gum, tragacanth gum, konjac gum, gum arabic, tara gum, gellan gum, curdlan, pullulan, welan gum, pectin, dextrin, cyclodextrins, rosin, sclerotium gum, carrageenans and mixtures thereof.

6. The biodegradable rheology modifier according to any of the previous claims, wherein the biodegradable rheology modifier comprises at least two gums, at least one of the gums preferably being selected from the group comprising: xanthan gum, konjac gum, guar gum and locust bean gum.

7. The biodegradable rheology modifier according to any of the previous claims, wherein the ratio of surface-modified bacterial cellulose to gum is between 4:1 and 3:7, preferably between 6:5 and 5:6, more preferably around 1:1.

8. The biodegradable rheology modifier according to any of the previous claims, wherein the pH of the biodegradable rheology modifier is set by means of a buffer to be in the range of 3 - 13, more preferably 4 - 10, wherein the buffer is preferably a phosphate buffer, a citrate, a carbonic acid, a bicarbonate buffer or a combination thereof.

9. The biodegradable rheology modifier according to any of the previous claims, wherein the biodegradable rheology modifier further comprises an antimicrobial agent, preferably selected from the group comprising alkali or alkali earth metal salts, especially preferably: sodium benzoate, sodium metabisulphite, an antioxidant or mixtures thereof.

10. A fluid product comprising the biodegradable rheology modifier according to any of the previous claims, wherein the fluid product is preferably a personal care product, a home care product, a laundry or detergent product, an agro formulation product, a pharmaceutical product, an ink, a paint, a coating or a food product.

11. The fluid product according to the previous claim, wherein the concentration of surface-modified cellulose in the product is between 0.2 - 5 w/w%, preferably 0.5 - 2 w/w%, more preferably 1 - 1.5 w/w% and/or wherein the concentration of gum in the fluid product is between 0.2 - 5 w/w%, preferably 0.5 - 2 w/w%, more preferably 1 - 1.5 w/w%.

12. A method of producing a biodegradable rheology modifier according to any of the previous claims
**characterized in that**
the method comprises:
- surface modification of cellulose by carboxylation to form carboxyl groups and/or derivatives thereof in the cellulose polymers,
- mixing of the surface-modified cellulose with a natural gum.

13. The method according to the previous claim wherein the method further comprises grinding of the cellulose before surface-modification such that an average particle size of the cellulose in granular form is between 1 µm -1000 µm, preferably between 1 µm - 500 µm, more preferably between 1 µm - 100 µm.

14. The method according to claim 12 or claim 13, wherein the grinding of the cellulose is carried out in the presence of hydrogen peroxide, such that the cellulose is additionally bleached.

15. The method according to any of claims 12 - 14, wherein the surface modification of the cellulose is carried out in the presence of at least one catalyst, preferably selected from the group comprising:
- N-oxyl compounds, preferably TEMPO (2,2,6,6-tetramethylpiperidine-N-oxyl) or TEMPO derivatives (T1-T4) having at least one functional group at position C4,
- alkali metal halides, preferably KBr, NaBr or LiBr and
- oxidising agents, preferably oxygen, ozone, hydrogen peroxide, ammonium persulfate, potassium persulfate, sodium persulfate or potassium permanganate.
